# EUROPÄISCHE PATENTANMELDUNG

(11) **EP 1 571 312 A2**
(43) Veröffentlichungstag der Anmeldung: **07.09.2005**
(21) Anmeldenummer: 05000301.1
(22) Anmeldetag: 08.01.2005
(51) Int. Cl.: F02D 9/10, F02B 27/02, F02B 31/06

(54) **Klappenlagerbefestigung**

(30) Priorität: 04.03.2004 DE 102004010555
(71) Anmelder: Pierburg GmbH, 41460 Neuss (DE)
(72) Erfinder: Hüsges, Hans-Jürgen, 47877 Willich (DE)
(74) Vertreter: Ter Smitten, Hans

(57) **Zusammenfassung**

Die erfindungsgemäße Klappenlagerbefestigung zur Befestigung von Klappenvorrichtungen 5, wie Schalt-, Tumble- oder Drallklappenvorrichtungen an einem Gehäuse (2) eines Luftansaugkanalsystems (1) einer Verbrennungskraftmaschine erfolgt durch ein Warmverformen von Vorsprüngen (19), welche an Lagerelementen (10) der Klappenvorrichtung (5) ausgebildet sind und durch entsprechende Öffnungen (20), welche im Gehäuse (2) des Luftansaugkanalsystems (1) ausgebildet sind, reichen.

Hierdurch wird es möglich, kostengünstige einteilige Klappenwellen (6,7) exakt in allen Luftansaugkanalsystemen (1) zu befestigen, ohne zusätzliche Befestigungselemente verwenden zu müssen. Durch die exakte Lagefixierung wird ein Verziehen der Welle (6,7) mit den darauf angeordneten Klappenkörpern (8) zuverlässig verhindert und die Lebensdauer der gesamten Klappenvorrichtung (5) erhöht.

## Beschreibung

Die Erfindung betrifft eine Klappenlagerbefestigung an einem Luftansaugkanalsystem einer Verbrennungskraftmaschine, wobei das Luftansaugkanalsystem ein zumindest einteiliges Gehäuse aufweist, in dem eine Klappenvorrichtung angeordnet ist, welche eine Klappenwelle, auf der zumindest ein Klappenkörper angeordnet ist und zumindest ein Lagerelement, in welchem die Klappenwelle gelagert ist, aufweist, wobei die Klappenvorrichtung über das zumindest eine Lagerelement im Gehäuse des Luftansaugkanalsystems befestigt ist.

Es ist bekannt, verschiedenartig wirkende Klappenvorrichtungen in Luftansaugkanalsystemen anzuordnen und zu befestigen. Die Klappen können dabei in bekannter Weise als Schaltklappen zur Umschaltung der wirksamen Saugkanalrohrlänge oder als Tumbleklappen oder Drallklappen zur Erzeugung eines Wirbels im Zylinder dienen.

In der DE 199 44 623 A1 wird ein Luftansaugkanalsystem offenbart, bei dem eine Drallklappenvorrichtung in einen Einsatzschacht am Luftansaugkanalsystem eingesetzt ist. Die Drallklappen sind dabei in einem Einsatzstück angeordnet, welches aus zwei zusammen gesetzten Einsatzhälften gebildet ist. Diese Einsatzhälften werden über die Drallklappe lagernde Lagerbohrungen zusammen gefügt, so dass die Drallklappe dort gehalten wird. Die gesamte Klappenvorrichtung kann dann in ein Gehäuseunterteil des Luftansaugkanalsystems eingeschoben werden und wird dort mittels Schrauben befestigt.

In der DE 196 14 474 wird ein Luftansaugkanalsystem offenbart, bei dem eine Schaltklappenwelle mehrere Schaltklappenkörper trägt, wobei die Lagerung der Welle über zweiteilige Lagerpaßstücke erfolgt, in welche die Schaltklappenwelle eingelegt wird. Diese Lagerpaßstücke werden in entsprechende Aufnahmeöffnungen im Gehäuse des Luftansaugkanalsystems eingeschoben. Ein Herausfallen der Schaltklappenvorrichtung beziehungsweise der Lagerpaßstücke wird durch ein Aufsetzen eines zweiten Gehäuseteils des Luftansaugkanalsystems verhindert, so dass die Lagerpaßstücke von allen Seiten vom Gehäuse umfaßt werden. Dabei ist zu beiden Seiten jeder Schaltklappe ein Lagerpaßstück angeordnet.

In der DE 199 46 861 wird ein Luftansaugkanalsystem mit einer Tumbleklappenvorrichtung offenbart, welche aus einem einstückigen Lagerrahmen und darin angeordneten Tumbleklappen besteht. Zur Befestigung des Lagerrahmens am Gehäuse des Luftansaugkanalsystems ist eine Anzahl von nicht näher dargestellten Positionierelementen die als Paßstifte ausgebildet sind, vorgesehen, so dass eine formschlüssige Verbindung erfolgt, wobei ein Herausfallen der gesamten Klappenvorrichtung in Richtung des Zylinderkopfes erst durch das Aufschrauben des Luftansaugkanalsystems auf den Zylinderkopf verhindert wird.

In der DE 101 43 386 wird wiederum ein Luftansaugkanalsystem mit einer Schaltklappenvorrichtung beschrieben, welche ebenfalls aus einem Einlegerahmen und einer darin drehbar gelagerten Schaltwelle besteht. Hier handelt es sich um einen einstückigen Lagerrahmen, der zwei Schaltklappenwellen für einen V-Motor aufnimmt. Auch hier wird der gesamte Einlegerahmen in entsprechende Ausnehmungen des Gehäuses des Luftansaugkanalsystems eingesetzt und durch das Zusammensetzen der beiden Gehäuseteile im Luftansaugkanalsystem fixiert.

In der DE 102 36 393 wird schließlich eine Tumbleklappenvorrichtung für ein Luftansaugkanalsystem offenbart, bei dem jeder Klappe ein einzelnes Lagerelement zugeordnet ist, in welches die Tumbleklappe verschwenkbar ist. Auch diese Lagerelemente werden mit den Klappen zunächst formschlüssig in einem ersten Gehäuseteil des Luftansaugkanalsystems eingelegt und durch Aufschrauben des zweiten Gehäuseteils fixiert.

Eine solche Fixierung durch das Aufeinandersetzen zweier Gehäuseteile erfordert jedoch, dass die jeweilige Klappenvorrichtung so angeordnet ist, dass das Gehäuse auch an dieser Stelle teilbar ist. Vielfach ist dies jedoch nicht möglich, so dass eine andere Befestigung beispielsweise durch Verschrauben gewählt werden muss. Eine derartige Befestigung mit kraftschlüssig wirkenden zusätzlichen Befestigungsmitteln führt jedoch zu einer höheren Anzahl an Bauteilen. Daraus ergibt sich zusätzlich der Nachteil, dass die Gefahr eines Lösens der Befestigungsmittel aufgrund von Vibrationen entstehen kann, was außer zu einer gestörten Funktionalität auch zu einer Beschädigung des Motors führen kann.

Eine Befestigung durch das Aufeinandersetzen zweier Gehäuseteile hingegen setzt enge einzuhaltende Toleranzmaße in der Fertigung der korrespondierenden Auflageflächen voraus, was zu erhöhten Kosten führt. Schwierig wird dies insbesondere dann, wenn spritzgegossene Kunststoffwellen verwendet werden, die einstückig mit den Klappen hergestellt werden und womöglich auch zusätzliche Anschläge aufweisen. Dies führt in der Regel dazu, dass die Welle sich verzieht und dieser Verzug durch eine exakte und feste Anordnung der Lagerlemente ausgeglichen werden muss.

Entsprechend ist es Aufgabe der Erfindung eine Befestigung einer Klappenvorrichtung in einem Luftansaugkanalsystem zu schaffen, welche auch an Positionen im Luftansaugkanalsystem erfolgen kann, an denen eine formschlüssige Fixierung durch die Gehäuseteile des Luftansaugkanalsystems nicht möglich ist, ohne zusätzliche Befestigungsmittel zu verwenden. Es soll außerdem eine exakte Lagefixierung der Lagerelemente im Gehäuse erreicht werden, ohne dass enge Toleranzen eingehalten werden müssen, so dass preisgünstige spritzgegossene Kunststoffwellen verwendet werden können. Im Vergleich zu Befestigungen mit Schrauben oder dergleichen soll eine höhere Sicherheit und Lebensdauer erreicht werden.

Diese Aufgaben werden dadurch gelöst, dass das zumindest eine Lagerelement Vorsprünge aufweist, welche im zusammengebauten Zustand durch korrespondierende Öffnungen im Gehäuse des Luftansaugkanalsystems reichen, wobei durch Warmverformung der Vorsprünge das zumindest eine Lagerelement am Gehäuse befestigt ist. Durch eine solche Ausführung wird auf kostengünstige Weise eine exakte Fixierung am Gehäuse des Luftansaugkanalsystems erreicht, ohne zusätzliche Befestigungsmittel zu verwenden, wodurch Beschädigungen am Motor durch sich lösende Teile vermieden werden. Zusätzlich können die Lagerelemente in Bezug auf ihre Ausmaße einen höheren Toleranzbereich im Vergleich zu den bekannten formschlüssigen Verbindungen aufweisen.

In einer weiterführenden Ausführungsform weist das Gehäuse um die Öffnungen, durch die die Vorsprünge des zumindest einen Lagerelementes reichen, Einbuchtungen auf, so dass nach dem Warmverformen der Vorsprünge die Oberfläche des Gehäuses im wesentlichen glatt ist. Hierdurch wird erreicht, dass die Befestigung der Lagerelemente auch an einer Position im Gehäuse des Saugrohres statt finden kann, an dem die Vorsprünge im Bereich der luftführenden Kanäle angeordnet sind, ohne nach dem Zusammenbau Strömungsverluste durch die Vorsprünge zu erhalten.

In einer bevorzugten Ausführungsform weist jedes einzelne Lagerelement, welches am Gehäuse über die Vorsprünge befestigt ist, zumindest zwei Vorsprünge auf. Entsprechend erhält jedes Lagerelement zumindest zwei Fixierpunkte, wodurch ein Verdrehen des Lagerelementes innerhalb des Luftansaugkanalsystems zuverlässig verhindert wird.

In einer bevorzugten Ausführungsform sind die Vorsprünge als kreisförmige Stifte und die Öffnungen als Bohrungen ausgebildet, wodurch eine einfache Herstellbarkeit sowohl des Gehäuseteils des Saugrohres als auch der Vorsprünge an den Lagerelementen erreicht wird.

Vorteilhafterweise ist das Gehäuse des Luftansaugkanalsystems aus Druckguß, insbesondere Magnesiumdruckguß, und die Klappenvorrichtung aus Kunststoff hergestellt. Aufgrund der unterschiedlichen Schmelzpunkte der Materialien ist die Warmverformung zum Befestigen der Lagerelemente somit einfach durchzuführen und die gesamte Klappenvorrichtung ist kostengünstig beispielsweise im Spritzgußverfahren herstellbar.

In einer bevorzugten Ausführungsform ist das Gehäuse des Luftansaugkanalsystems mehrteilig ausgeführt, wobei die Klappenvorrichtung an einem oberen Einlegeteil des Gehäuses befestigt ist. Hierdurch kann auch bei komplizierten Formen der Ansaugkanäle ein Druckgußverfahren verwendet werden, um das Gehäuse des Luftansaugkanalsystems herzustellen und die einfache Form des oberen Einlegeteils vereinfacht die Handhabung beim Herstellen der Verbindung zwischen Klappenvorrichtung und oberem Einlegeteil des Gehäuses.

Des weiteren ist es vorteilhaft, wenn zumindest eine zum Gehäuse gerichtete geformte Wandfläche des Lagerelementes zumindest teilweise gegen eine korrespondierend geformte Wandfläche des Gehäuses des Luftansaugkanalsystems anliegt, wodurch wiederum die Handhabung bei der Herstellung der Verbindung vereinfacht wird, da die Lage des Lagerelementes am Gehäuseteil des Saugrohres vorfixiert werden kann.

In einer bevorzugten Ausführungsform ist die Klappenvorrichtung in einem ein- oder mehrteiligen Lagerrahmen angeordnet, in dem die Klappenwelle mit dem zumindest einen Klappenkörper gelagert ist, wobei die Klappenvorrichtung vormontiert in das Gehäuse des Luftansaugkanalsystems einlegbar ist. Auf diese Weise kann die Klappenvorrichtung in nur einem Verfahrensschritt in das Gehäuse eingebracht werden, da eine komplette in sich fixierte Einheit besteht.

In einer alternativen Ausführungsform weist die Klappenvorrichtung für jeden Klappenkörper zumindest ein Lagerelement auf, welches ein- oder mehrteilig ausgeführt ist. Je nach Aufbau des Gehäuses des Luftansaugkanalsystems kann hierdurch wiederum die Form des entsprechenden Gehäuseteils vereinfacht werden und dennoch ein sicherer Sitz und eine gute Befestigung der gesamten Klappenvorrichtung im Gehäuse gewährleistet werden.

In einer weiteren alternativen Ausführungsform weist die Klappenvorrichtung zumindest ein Lagerelement auf, welches mehrteilig ausgeführt ist, wobei ein oder mehrere erste Lagerteile, die die Klappenwelle ganz oder teilweise umschließen, mit einer geformten Wandfläche gegen korrespondierend geformte Wandflächen des Gehäuses des Luftansaugkanalsystems anliegen und ein oder mehrere zweite Lagerteile, welche die Vorsprünge aufweisen, derart auf dem oder den ersten Lagerteilen aufliegen, dass durch das Warmverformen der Vorsprünge, welche durch die Öffnungen im Gehäuse reichen, dass oder die ersten Lagerteile formschlüssig befestigt sind. Bei einer derartigen Ausführung findet die Montage direkt im entsprechenden Gehäuseteil des Luftansaugkanalsystems statt. Im wesentlichen gleiche Lagerelemente können für verschieden große aber im wesentlichen formgleiche Luftansaugkanalsysteme verwendet werden, so dass Werkzeug- und Herstellungskosten aufgrund der großen Stückzahlen verringert werden.

In einer weiteren Ausführungsform sind zwei Klappenwellen über einen ein- oder mehrteiligen Lagerrahmen im Gehäuse befestigt, so dass beispielsweise in einem V-Motor in nur einem Montageschritt den beiden Zylinderbänken zugeordneten Klappenvorrichtungen befestigt werden können.

Somit wird eine Klappenlagerbefestigung geschaffen, welche für alle Formen von Luftansaugkanalsystemen verwendet werden kann, wobei zusätzlich kostengünstige Schaltklappenwellen, für die gesonderte Lagerungen notwendig sind, verwendet werden können, ohne zusätzliche Befestigungsmittel benutzen zu müssen. Fehlfunktionen beispielsweise durch das Lösen einer Schraube werden zuverlässig vermieden und die Lebensdauer der gesamten Klappenvorrichtung entsprechend erhöht. Durch die einfache Montage und Herstellung werden des weiteren Kosten eingespart.

In den Zeichnungen sind zwei Ausführungsbeispiele dargestellt, die nachfolgend beschrieben werden.
Figur 1 zeigt eine Seitenansicht einer ersten Ausführungsform einer erfindungsgemäßen Klappenlagerbefestigung in geschnittener Darstellung.
Figur 2 zeigt einen Ausschnitt einer erfindungsgemäßen Klappenlagerbefestigung in alternativer Ausführungsform in geschnittener Darstellung in Seitenansicht.
Figur 3 zeigt eine perspektivische Ansicht eines größeren Ausschnitts der Klappenlagerbefestigung aus Figur 2 ohne Gehäuse des Luftansaugkanalsystems

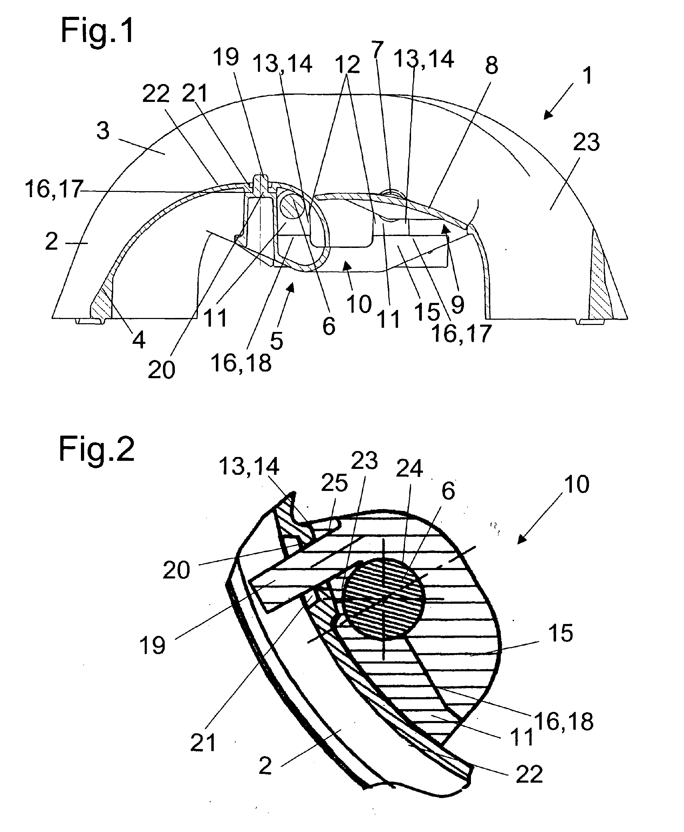

Figur 1 zeigt ein erstes Ausführungsbeispiel eines Luftansaugkanalsystems 1 mit einer erfindungsgemäßen Klappenlagerbefestigung. Das Luftansaugkanalsystem 1 besteht aus einem mehrteiligen Gehäuse 2, wobei hier das Gehäuseoberteil 3 sowie das obere Einlegeteil 4 dargestellt sind. Die Klappenlagerbefestigung erfolgt am oberen Einlegeteil 4, wobei eine Klappenvorrichtung 5 als Schaltklappenvorrichtung zum Ändern der wirksamen Schwingrohrlänge dient.

Die Klappenvorrichtung 5 besteht aus zwei Schaltklappenwellen 6, 7 auf denen Schaltklappenkörper 8 angeordnet sind, welche über eine nicht dargestellte Stellvorrichtung in eine einen Kurzschlußweg 9 frei schaltende oder verschließende Stellung gedreht werden können. Diese Klappenkörper 8 sind vorzugsweise einstückig mit der jeweiligen Klappenwelle 6 oder 7 hergestellt.

Zusätzlich besteht die Klappenvorrichtung 5 aus einem mehrteiligen Lagerelement 10, bei dem im vorliegenden Ausführungsbeispiel jeweils ein erstes Lagerteil 11 zur Aufnahme der Klappenwellen 6, 7 dient und jeweils zwischen den Klappenkörpern 8 angeordnet ist. Diese Lagerteile 11 können ebenfalls ein- oder zweistückig ausgeführt werden. Die ersten Lagerteile 11 werden mit den Klappenwellen 6,7 und den darauf angeordneten Klappenkörpern 8 in Ausnehmungen 12 im Gehäuse eingelegt, wobei die jeweiligen zum Luftansaugkanalsystem gerichteten Wandflächen 13 der ersten Lagerteile 11 mit den entsprechend geformten Wandflächen 14 der Ausnehmungen 12 korrespondieren, so dass eine definierte Lage der Klappenwellen 6, 7 erreicht wird, welche lediglich einen Freiheitsgrad entgegen der Einsteckrichtung aufweisen. Zur abschließenden Fixierung der ersten Lagerteile 11 im oberen Einlegeteil 4 wird ein zweites Lagerteil 15, welches im vorliegenden Ausführungsbeispiel als einteiliger Lagerrahmen ausgeführt ist, auf das obere Einlegeteil 4 gesetzt, wobei dieser Lagerrahmen 15 so geformt ist, dass wiederum seine zum oberen Einlegeteil 4 gerichteten Wandflächen 16 sowohl gegen korrespondierend geformte Wandflächen 17 des oberen Einlegeteils 4 als auch gegen korrespondierend geformte, im vorliegenden Fall glatte, freie Wandflächen 18 der ersten Lagerteile 11 aufliegen, so dass durch Befestigung des Lagerrahmens 15 am oberen Einlegeteil 4 die ersten Lagerteile 11 beider Klappenwellen 6, 7 für beide Zylinderbänke in den entsprechenden Ausnehmungen 12 des Gehäuses 2 formschlüssig gehalten werden.

Diese Befestigung erfolgt erfindungsgemäß durch Warmverformen von Vorsprüngen 19, welche am Lagerrahmen 15 angeordnet sind und durch Öffnungen 20 im oberen Einlegeteil 4 reichen. Die Vorsprünge 19 sind hier als Stifte ausgeführt und die Öffnungen 20 als Bohrungen. Das obere Einlegeteil 4 weist jeweils an den Bohrungen 20 an der Seite, durch die die Stifte 19 reichen, Einbuchtungen 21 auf. Bei der Warmverformung der Stifte 19 fließt das verflüssigte Material der Stifte 19 in diese Einbuchtungen 21, deren Volumen möglichst genau dem verflüssigten Volumen der Stifte 19 entspricht, wodurch eine glatte Oberfläche 22 des Einlegeteils 4 nach dem Warmverformen der Stifte 19 erreicht wird, so dass Strömungsverluste bei Verwendung des Luftansaugkanalsystems an dieser Stelle verhindert werden.

Durch das Warmverformen entsteht eine exakte Fixierung der gesamten Klappenvorrichtung 5 am oberen Einlegeteil 4, so dass dieses nun in das Gehäuseoberteil 3 eingelegt und befestigt werden kann, wodurch die zu den beiden nicht dargestellten Zylinderbänken führenden Luftansaugkanäle 23 gebildet werden. Die Enden beider Klappenwellen 6,7 können über eine nicht dargestellte Verbindungsstange miteinander verbunden werden, so dass sie gemeinsam von einer Stellvorrichtung betätigt werden können.

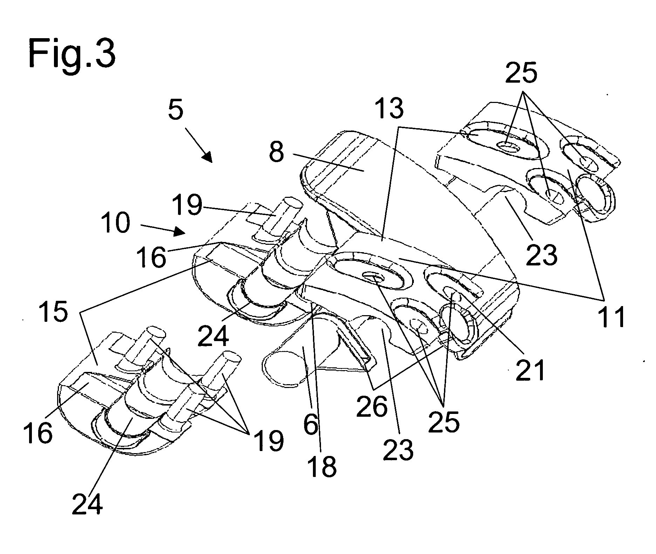

In der Ausführungsform gemäß der Figuren 2 und 3 besteht die Klappenvorrichtung 5 aus der Klappenwelle 6 mit darauf angeordneten Klappenkörpern 8, wobei zwischen jedem Klappenkörper 8 jeweils ein zweiteiliges Lagerelement 10 angeordnet ist. Zu Figur 1 funktionsgleiche Teile sind mit gleichen Bezugsziffern gekennzeichnet. Jedes Lagerelement 10 weist ein erstes Lagerteil 11 und ein zweites Lagerteil 15 auf, zwischen denen eine Klappenwelle 6 drehbar gelagert ist. Die Befestigung folgt in der Weise, dass die ersten Lagerteile 11 mit ihren zu den Wandflächen 14 des Gehäuses 2 des Luftansaugkanalsystems 1 korrespondierenden Wandflächen 13 auf das Gehäuse 2 aufgelegt werden. Anschließend wird die Klappenwelle 6 mit den darauf angeordneten Klappenkörpern 8 in entsprechende halbrunde Aufnahmen 23 der ersten Lagerteile 11 eingelegt. Zur Befestigung dieser ersten Lagerteile 11 und somit der gesamten Klappenvorrichtung 5 werden die zweiten Lagerteile 15, welche wiederum eine halbrunde Aufnahme 24 aufweisen, jeweils auf die ersten Lagerteile 11 beziehungsweise die Klappenwelle 6 aufgelegt, wobei die zweiten Lagerteile 15 wiederum zu den Wandflächen 18 der ersten Lagerteile 11 korrespondierende Wandflächen 16 aufweisen. Zusätzlich sind nicht nur im Gehäuse 2 Bohrungen 20 ausgeführt, sondern auch die ersten Lagerteile 11 weisen Bohrungen 25 auf, durch die die Stifte 19 der zweiten Lagerteile 15 hindurch geführt werden. Die Befestigung der gesamten Klappenvorrichtung 5 erfolgt wiederum durch Warmverformen der Vorsprünge beziehungsweise Stifte 19 von der zu den Lagerelementen 10 abgewandten Seite des Gehäuses 2, wobei wiederum Einbuchtungen 21 im Gehäuse 2 ausgebildet ist, in die das fließfähige Material der Stifte 19 beim Warmverformen so verteilt wird, dass eine im wesentlichen glatte Gehäuseoberfläche 22 entsteht. Um eine vollständige Fixierung jedes Lagerelementes 10 zu gewährleisten, weist dazu jedes zweite Lagerteil 15 zumindest zwei vorzugsweise, wie in Figur 3 dargestellt, drei Vorsprünge 19 auf, welche durch die Bohrungen 20 gesteckt werden.

In Figur 3 ist zusätzlich zu erkennen, dass an den zweiten Lagerteilen 15 ein Anschlag 26 zur Begrenzung des Klappenstellwinkels angeordnet ist. Bei einer derartigen Ausführungsform kann das jeweils letzte Lagerelement 10 der Klappenvorrichtung 5 einteilig ausgeführt sein und nur zwei Vorsprünge beziehungsweise Stifte 19 aufweisen, die im eingebauten Zustand durch die entsprechenden Bohrungen 20 in Gehäuse 2 reichen, da dieses Teil bei einer Welle 6 mit darauf angeordneten Klappenkörpern 8 von der Seite aufgesteckt werden kann.

Zwischen dem ersten und dem zweiten Lagerteil 11, 15 können des weiteren, falls gewünscht, korrespondierende Vorsprünge und Aufnahmen angeordnet werden, so dass die beiden Lagerteile gegebenenfalls miteinander verklipst werden können.

Aus den Ausführungsbeispielen wird deutlich, dass eine exakte Lagefixierung in allen denkbaren Ausführungen von Luftansaugkanalsystemen aufgrund der erfindungsgemäßen Klappenbefestigung möglich ist, so dass kostengünstige Schaltklappenwellen verwendet werden können, ohne zusätzliche Befestigungsmittel verwenden zu müssen.

Es sollte klar sein, dass verschiedene Ausführungsformen gemäß der Unteransprüche der vorliegenden Erfindung denkbar sind, so dass beispielsweise auch einteilige Lagerrahmen oder einteilige Lagerelemente zwischen den Klappen angeordnet werden können. Hierzu wäre es notwendig die Klappenwelle mit den Klappenkörpern in den Lagerelementen Montage zu spritzen. Es sollte jedoch auch klar sein, dass jede andere Form der Aufteilung der einzelnen Lagerelemente möglich ist, wobei erfindungsgemäß eine Befestigung an einem beliebigen Gehäuseteil des Luftansaugkanalsystems durch Warmverformen entsprechender Vorsprünge erreicht wird.

Die Anwendung einer solchen Befestigung beschränkt sich nicht, wie in den Ausführungsbeispielen auf Schaltklappen, sondern eignet sich ebenfalls für jegliche Arten von Lagerelementen für Tumble- oder Drallklappenwellen in Luftansaugkanalsystemen.

## Patentansprüche

1. Klappenlagerbefestigung an einem Luftansaugkanalsystem einer Verbrennungskraftmaschine, wobei das Luftansaugkanalsystem ein zumindest einteiliges Gehäuse aufweist, in dem eine Klappenvorrichtung angeordnet ist, welche eine Klappenwelle, auf der zumindest ein Klappenkörper angeordnet ist und zumindest ein Lagerelement, in dem die Klappenwelle gelagert ist, aufweist, wobei die Klappenvorrichtung über das zumindest eine Lagerelement im Gehäuse des Luftansaugkanalsystems befestigt ist, **dadurch gegenzeichnet, dass** das zumindest eine Lagerelement (10) Vorsprünge (19) aufweist, welche im zusammen gebauten Zustand durch korrespondierende Öffnungen (20) im Gehäuse (2) des Luftansaugkanalsystems (1) reichen, wobei durch Warmverformung der Vorsprünge (19) das zumindest eine Lagerelement (10) am Gehäuse (2) befestigt ist.

2. Klappenlagerbefestigung nach Anspruch 1, **dadurch gegenzeichnet, dass** das Gehäuse (2) um die Öffnungen (20), durch die die Vorsprünge (19) des zumindest einen Lagerelementes (10) reichen, Einbuchtungen (21) aufweist, so dass nach dem Warmverformen der Vorsprünge (19) die Oberfläche (22) des Gehäuses (2) im wesentlichen glatt ist.

3. Klappenlagerbefestigung nach einem der Ansprüche 1 oder 2, **dadurch gekennzeichnet, dass** jedes einzelne Lagerelement (10), welches am Gehäuse (2) über die Vorsprünge (19) befestigt ist, zumindest zwei Vorsprünge (19) aufweist.

4. Klappenlagerbefestigung nach einem der vorhergehenden Ansprüche, **dadurch gekennzeichnet, dass** die Vorsprünge (19) als kreisförmige Stifte und die Öffnungen (20) als Bohrungen ausgebildet sind.

5. Klappenlagerbefestigung nach einem der vorhergehenden Ansprüche, **dadurch gekennzeichnet, dass** das Gehäuse (2) des Luftansaugkanalsystems (1) aus Druckguß insbesondere Magenesiumdruckguß, und die Klappenvorrichtung (5) aus Kunststoff hergestellt ist.

6. Klappenlagerbefestigung nach einem der vorhergehenden Ansprüche, **dadurch gekennzeichnet, dass** das Gehäuse (2) des Luftansaugkanalsystems (1) mehrteilig ausgeführt ist, wobei die Klappenvorrichtung (5) an einem oberen Einlegeteil (4) des Gehäuses (2) befestigt ist.

7. Klappenlagerbefestigung nach einem der vorhergehenden Ansprüche, **dadurch gekennzeichnet, dass** zumindest eine zum Gehäuse gerichtete geformte Wandfläche (13, 16) des Lagerelementes (10) zumindest teilweise gegen eine korrespondierend geformte Wandfläche (14, 17) des Gehäuses (2) des Luftansaugkanalsystems (1) anliegt.

8. Klappenlagerbefestigung nach einem der vorhergehenden Ansprüche, **dadurch gekennzeichnet, dass** die Klappenvorrichtung (5) in einem ein- oder mehrteiligen Lagerrahmen (15) angeordnet ist, in dem die Klappenwelle (6, 7) mit dem zumindest einen Klappenkörper (8) gelagert ist, wobei die Klappenvorrichtung (5) vormontiert in das Gehäuse des Luftansaugkanalsystems einlegbar ist.

9. Klappenlagerbefestigung nach einem der Ansprüche 1 bis 7, **dadurch gekennzeichnet, dass** die Klappenvorrichtung (5) für jeden Klappenkörper (8) zumindest ein Lagerelement (10) aufweist, welches ein- oder mehrteilig ausgeführt ist.

10. Klappenlagerbefestigung nach einem der Ansprüche 1 bis 7, **dadurch gekennzeichnet, dass** die Klappenvorrichtung (5) zumindest ein Lagerelement (10) aufweist, welches mehrteilig ausgeführt ist, wobei ein oder mehrere erste Lagerteile (11), die die Klappenwelle (6, 7) ganz oder teilweise umschließen, mit einer geformten Wandfläche (13) gegen korrespondierend geformte Wandflächen (14) des Gehäuses des Luftansaugkanalsystems anliegen und ein oder mehrere zweite Lagerteile (15), welche die Vorsprünge (19) aufweisen, derart auf dem oder den ersten Lagerteilen (11) aufliegen, dass durch das Warmverformen der Vorsprünge (19), welche durch die Öffnungen (20) im Gehäuse (2) reichen, das oder die ersten Lagerteile (11) formschlüssig im Gehäuse (2) befestigt sind.

11. Klappenlagerbefestigung nach einem der Ansprüche 8 oder 10, **dadurch gekennzeichnet, dass** zwei Klappenwellen (6, 7) über einen ein- oder mehrteiligen Lagerrahmen (15) im Gehäuse (2) befestigt sind.
